# EUROPEAN PATENT APPLICATION

(11) **EP 4 775 536 A1**
(43) Date of publication of application: **15.07.2026**
(21) Application number: 24862645.9
(22) Date of filing: 26.08.2024
(51) Int. Cl.: C01B 32/05, C01B 32/184

(54) **METHOD FOR PRODUCING CARBON MATERIAL**

(30) Priority: 08.09.2023 JP 2023145730
(71) Applicant: Jikan Techno, Inc., Osaka-shi, Osaka 553-0003 (JP); Kinoshita, Takahiro, Osaka-shi, Osaka 553-0003 (JP)
(72) Inventor: KINOSHITA Takahiro, Osaka-shi, Osaka 553-0003 (JP)
(74) Representative: Studio Torta S.p.A.
(86) International application number: PCT/JP2024/030278
(87) International publication number: WO 2025/052993

(57) **Abstract**

[Object] The present invention aims to provide a heat-generating paint that can be manufactured using a carbon material produced from plant-based raw materials as a carbon source, thereby reducing CO2 emissions, and that can maintain its strength over a wide temperature range.

[Solution] The paint is characterized by using a carbon material containing 1 to 50 wt% silicon by weight, produced from plant-based raw materials containing 5% or more silicon, as a pigment. Furthermore, by mixing carbide 19, which contains many functional groups, with graphene 113 to form a paint pigment, it is possible to supply high-voltage power, such as AC power as well as DC power, while maintaining stable strength.

## Description

### [Technical Field]

The present invention relates to a method for producing carbon materials such as graphene from plant-based raw materials.

### [Background Art]

Plant-based raw materials have traditionally been used for battery materials, conductive materials, heating elements, tires, building materials, and other applications from a carbon-neutral perspective. In particular, carbon materials with large specific surface areas have been used as materials for batteries and capacitors. Carbon materials with excellent electrical conductivity have also been widely used as heating materials and shielding materials.

As such, various inventions have been proposed for producing carbon materials from plant-based raw materials. For example, Patent Document 1 describes a method for producing carbon materials by activating a carbonaceous raw material with an alkali metal compound to obtain activated carbon or activated carbon fiber with a high specific surface area. The method wraps the reaction system (a composition containing the carbonaceous raw material and an alkali metal compound) with a carbon-based powder layer, and optionally includes an inorganic compound layer in the carbon-based powder layer for activation. Also, a method for producing a carbon material in which the temperature increasing rate during activation is set to 20°C/hr or less to increase the yield of carbon materials per container. An electric double layer capacitor uses activated carbon or activated carbon fiber obtained by this production method as an electrode material.

For example, Patent Document 2 discloses an invention that includes a pretreatment step (S1) in which a plant-derived raw material is dried and pulverized to obtain a carbon source, a carbonization step (S2) in which the carbon source is carbonized to obtain a charcoal, and a purification step (S3) in which impurities, including silica, are removed from the charcoal obtained in the carbonization step, and the carbonization step includes a heating step in which an inert gas is supplied into a chamber and the carbon source in the chamber is heated in a plasma atmosphere.

### [Prior Art Documents]

### [Patent Documents]

[Patent Document 1] JP 2002-362915 A
[Patent Document 2] JP 2020-55727 A

### [Disclosure of the Invention]

### [Problem to be Solved by the Invention]

In the methods for producing carbon materials from plant-based raw materials described in the patent documents, activation is performed using various chemicals. Porous carbon materials are produced using chemicals such as strong alkalis, but these chemicals cause severe metal corrosion during the calcination process such as carbonization, shortening the device's lifespan. Furthermore, a desirable manufacturing method is that minimizes manufacturing steps and reduces manufacturing costs. Furthermore, when used as a battery material, it is necessary to remove silicon to increase the purity of the carbon material in order to improve its specific surface area.

The present invention was conceived to solve the above problems. It aims to provide a manufacturing method that contributes to CO2 reduction by using carbon materials produced from plant-based raw materials and reduces manufacturing costs.

### [Means for Solving the Problem]

A method for producing a heat-generating paint, characterized by mixing and dispersing a carbon material produced from plant-based raw materials in a synthetic resin emulsion.

### [Effects of the Invention]

As a result of the above features, the present invention can contribute to CO2 reduction by using a carbon material produced from plant-based raw materials, and can provide a heat-generating paint that maintains its strength over a wide range of temperatures.

### [Brief Description of the Drawings]

Figure 1 is a Raman spectrum of graphene according to an embodiment.
Figure 2 is a Raman spectrum of carbide according to an embodiment.
Figure 3 is a schematic diagram showing a configuration of a heat-generating element coated with a heat-generating paint according to an embodiment.
Figure 4 is a schematic diagram showing temperature characteristics of a heat-generating element according to an embodiment.
Figure 5 is a schematic diagram showing temperature characteristics of a heat-generating element according to an embodiment.
Figure 6 is a schematic diagram showing a configuration of a plasma device according to an embodiment.
Figure 7 is a diagram showing a process flow for producing a carbon material according to an embodiment.
Figure 8 is a diagram showing a process flow for producing a carbon material according to an embodiment.
Figure 9 is a conceptual diagram of another example of the neutralization process according to an embodiment.
Figure 10 is a conceptual diagram of another example of the apparatus used in the neutralization process according to an embodiment.
Figure 11 is a diagram showing a process flow illustrating the manufacturing process for producing a carbon material according to an embodiment.
Figure 12 is a schematic diagram showing a configuration of another example of a heating element coated with the heat-generating paint according to the embodiment.
Figure 13 is a schematic diagram showing a configuration of another example of a heating element coated with the heat-generating paint according to the embodiment.

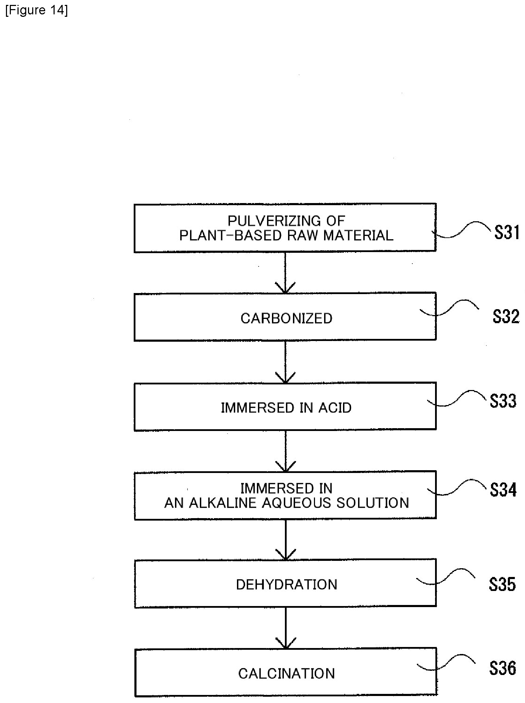

Figure 14 is a diagram showing a process flow illustrating the manufacturing process for producing a carbon material according to the embodiment.

### [Embodiments for Implementing the Invention]

The heat-generating paint according to the present invention will be described in detail with reference to the drawings. Note that the embodiments and drawings described below exemplify some of the embodiments of the present invention and are not intended to limit the scope of the present invention. Modifications can be made as appropriate without departing from the spirit and scope of the present invention.

### <Biomass Material>

A plant-based raw material 9 from which graphene is produced will be described. The present invention produces the final product, graphene, using plant-based raw material 9, which is food waste or discarded food. Plant-based raw materials 9 are made from plants, wood, etc., but using discarded plant-based raw materials 9, such as harvest residue, as the raw material for graphene production makes it possible to obtain raw materials inexpensively.

**Table 1**

| COMPOSITION TABLE OF PLANT-BASE RAW MATERIAL | C | N | P | P₂O₅ | K | K₂O | Ca | Mg | Na |
|---|---|---|---|---|---|---|---|---|---|
| RICE STRAW | 37.4 | 0.53 | 0.06 | 0.14 | 1.75 | 2.11 | 0.05 | 0.19 | 0.11 |
| WHEAT STRAW | 40.3 | 0.67 | 0.08 | 0.18 | 1 | 1.21 | 0.21 | 0.11 | 0.06 |
| BARLEY STRAW | 41.8 | 0.58 | 0.08 | 0.18 | 1.4 | 1.69 | 0.29 | 0.1 | - |
| RICE BRAN | 40.2 | 1.18 | 0.9 | 2.06 | 1.1 | 1.33 | 0.01 | 0.7 | 0.07 |
| RICE HUSKS | 34.6 | 0.32 | 0.03 | 0.05 | 0.31 | 0.37 | 0.01 | 0.07 | 0.13 |
| BUCKWHEAT STRAW | 40.3 | 1.08 | 0.21 | 0.48 | 3.13 | 3.77 | 1.35 | 0.14 | - |
| SOYBEAN STRAW | 44.5 | 1.23 | 0.12 | 0.28 | 0.75 | 0.9 | 1.39 | 0.64 | 0.2 |
| SWEET POTATO VINES | 42.7 | 3.74 | 0.22 | 0.5 | 3 | 3.62 | 1 | 0.17 | 0.12 |
| TURNIP LEAVES | 39.8 | 3.33 | 0.27 | 0.62 | 4.35 | 5.24 | 1.7 | 0.8 | 0.49 |
| CARROT LEAVES | 41.4 | 2.63 | 0.25 | 0.57 | 4.2 | 5.06 | 0.56 | 0.19 | 0.51 |
| CORN CULMS | 43.8 | 0.92 | 0.09 | 0.21 | 1.32 | 1.59 | 0.24 | 0.12 | - |
| SUGARCANE TOPS | 46.1 | 0.99 | 0.1 | 0.23 | 1.2 | 1.45 | 0.37 | 0.12 | 0.18 |
| COCONUT SHELLS | 46.2 | 3.86 | 0.69 | 1.58 | 2.69 | 3.24 | 0.21 | 0.3 | 0.04 |
| PEANUT SHELLS | 51.1 | 0.75 | 0.02 | 0.06 | 0.47 | 0.57 | 0.17 | 0.05 | 0.05 |
| MANDARIN ORANGE PEELS | 44.5 | 0.76 | 0.05 | 0.11 | 0.58 | 0.7 | 0.4 | 0.06 | 0.07 |
| RED CEDAR SAWDUST | 51.1 | 0.07 | - | - | - | - | - | - | - |
| LARCH BARK | 59.6 | 0.06 | - | - | - | - | - | - | - |
| FALLEN LEAVES OF GINKYO | 50.3 | 0.71 | 0.06 | 0.15 | 0.29 | 0.35 | 1.5 | 0.23 | 0.06 |

Table 1 shows the compositions of plant-based raw materials 9. The percentages of the constituent components of the raw materials shown on the far left are shown on the right. For example, rice straw contains 37.4% carbon (C), 0.53% nitrogen (N), 0.06% phosphorus (P), 0.14% phosphate (P₂O₅), 1.75% potassium (K), 2.11% potash (K₂O), 0.05% calcium (Ca), 0.19% magnesium (Mg), and 0.11 % sodium (Na).

The plant-derived, silicon-containing porous plant material 9 undergoes no substantial change when carbonized at low temperatures (above 300°C and below 1000°C), and the pore arrangement can be maintained by removing the silicon. Many plant materials 9 have a structure in which cells are regularly arranged along their axes, with silicic acid deposited on the cell walls, resulting in thickened cells. Furthermore, there are narrow, compressed cell rows between the silicified cell rows, and by removing the silicon and other components after carbonization, it is possible to obtain a carbon material with a high specific surface area. As mentioned above, a plant material with a high silicic acid content of between 13% and 35% is suitable. Too much silicic acid results in less graphene being obtained, so a plant material 9 with a silicic acid content of around 20% is preferable.

Table 1 shows examples of carbon-rich plant materials 9. In addition to rice straw, other examples include wheat straw, barley straw, wheat husks, barley husks, cocoa husks, cocoa pod, rice bran, rice husks, buckwheat straw, soybean vines, sweet potato vines, turnip leaves, carrot leaves, corn stalks, sugarcane tops, sake lees, coconut shells, coconut meal, peanut shells, mandarin peel, coffee husks, coffee grounds, red cedar sawdust, larch bark, fallen ginkgo leaves, tomato branches and trunks, and grape branches and trunks. Plants themselves may also be used instead of residues.

For example, bamboo is a plant whose cellulose is composed of cellulose, hemicellulose, and lignin, and whose minerals include iron, magnesium, calcium, manganese, copper, and nickel.

Furthermore, when bamboo leaves are calcinated, silanol groups (Si-OH) are extracted, and during the calcination process they are extracted as SiO₄.

**[Table 2]**

| COMPONENT COMPOSITION TABLE OF PLANT-BASE RAW MATERIAL | | | | | | |
|---|---|---|---|---|---|---|
| MOISTURE | ASH | FAT | LIGNIN | HEMICELLULOSE | CELLULOSE | OTHERS |
| 8~10% | 15~18% | 0.1~05% | 18~25% | 16~20% | 30~35% | 5~10% |

**[Table 3]**

| INORGANIC CHEMICAL COMPOSITION TABLE OF PLANT-BASE RAW MATERIAL(wt%) | | | | | | | |
|---|---|---|---|---|---|---|---|
| SiO₂ | Al₂O₃ | CaO | Fe₂O₃ | K₂O | MgO | MnO | Na₂O |
| 92.14 | 0.04 | 0.48 | 0.03 | 3.2 | 0.16 | 0.18 | 0.09 |

Tables 2 and 3 show the chemical composition of the plant raw material 9 most suitable for the method of producing carbon materials in this invention, among the plant raw materials 9 listed in Table 1 above. Table 2 shows the percentages of the components that make up the raw material. For example, moisture is 8%-10%, ash is 10%-18%, lipids are 0.1%-0.5%, lignin is 18%-25%, hemicellulose is 16%-20%, cellulose is 30%-35%, and others are 5%-10%.

Thus, the main components that make up silica ash 19 are lignin, hemicellulose, and cellulose.

Table 3 shows the chemical composition of the inorganic substances in the plant raw material 9 listed in Table 2. The plant raw material 9 listed in Table 2 contains 80 wt% organic matter, such as cellulose, and 20 wt% inorganic matter. The chemical composition of the inorganic material in Table 3 is 92.14 wt% SiO2, 0.04 wt% Al2O3, 0.48 wt% CaO, 0.03 wt% Fe2O3, 3.2 wt% K2O, 0.16 wt% MgO, 0.18 wt% MnO, and 0.09 wt% Na2O. The plant-based raw material 9 shown in Table 2 contains a large amount of silicon oxide (SiO2) in the inorganic material.

### (Example)

### <Process Flow 1>

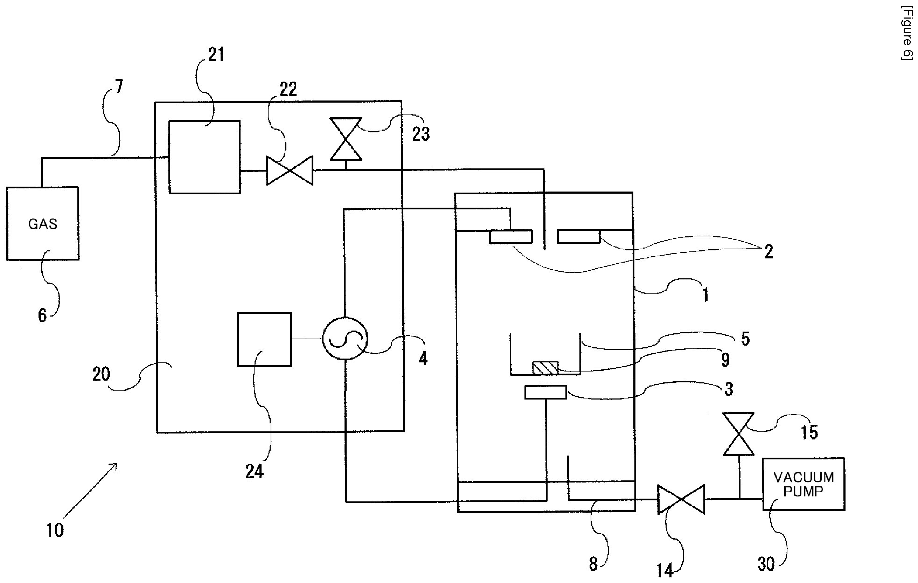

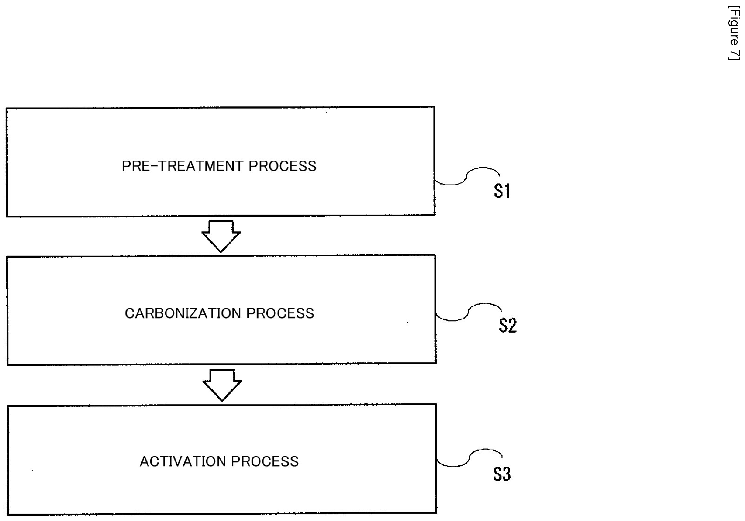

With reference to Figures 6 and 7, the manufacturing process for producing graphene 113 and carbide 19 will be described. Figure 7 shows a process flow illustrating the manufacturing process of an embodiment.

First, in the pre-treatment step S1, after drying the plant-based raw material 9 as described above, the plant-based raw material 9 is crushed. The crushed plant-based raw material 9 is mixed with a 10:1 granulating agent such as PVA and water to form the plant-based raw material 9 into particles of appropriate size, which are then kneaded together. The mixture is then heated to nearly 100°C on a drying device such as a hot plate to evaporate the water, producing the plant-based raw material 9. Grinding methods include milling, mixers, grinders, etc. In particular, the granulating agent can prevent the plant-based raw material 9 from being bumped by steam during induction heating.

Next, the carbonization step S2 will be described. In the pre-treatment step S1, approximately 0.8 g of the plant-based raw material 9 is placed in a crucible 5 and covered with a metal mesh or similar. The crucible 5 is then placed in the designated heating position of a plasma device 10 described above. The pressure inside chamber 1 is reduced to 80 Pa using a vacuum pump 30, and inert gas 6 is injected into chamber 1 at a flow rate of 8 to 10 ml/min, maintaining the pressure inside chamber 1 at 1300 to 1500 Pa. It is to be noted that similar graphenes can be produced using Examples 1 and 3 in the carbonization step S2.

The highest yield of 36% was measured at temperatures between 500°C and 800°C, with relatively high yields obtained between 300°C and 1000°C. In this measurement, such as rice straw, bran, coconut shells, rice husks, and peanut shells were used, and similar results were obtained. In the carbonization step S2, the plant-based raw material 9 is carbonized in approximately 10 to 30 minutes by heating at temperatures between 300°C and 1000°C using thermal plasma generated by arc discharge while inert gas 6 is being introduced.

Next, the activation step S3 will be described. The potassium hydroxide of 5 parts by weight was mixed with respect to one part of the carbide 19 obtained above, placed in a small crucible, and covered. The small crucible was then placed inside a large crucible, surrounded by activated carbon. The activated carbon was embedded to prevent oxygen from entering the small crucible. The heating furnace was heated to nearly 950°C and calcinated for approximately 2-3 hours.

Potassium hydroxide is used here to promote the removal of silicon and thereby improve the yield of the final product, graphene 113. Examples of bases include alkali metal hydroxides such as sodium hydroxide and lithium hydroxide, alkaline earth metal hydroxides such as magnesium hydroxide and calcium hydroxide, alkali metal oxides such as sodium oxide and potassium oxide, alkaline earth metal oxides such as magnesium oxide and calcium oxide, alkali metal sulfides such as sodium sulfide and potassium sulfide, and alkaline earth metal sulfides such as magnesium sulfide and calcium sulfide. Alternatively, incompletely carbonized lignin may be removed using one or more acids selected from the group consisting of hydrochloric acid, sulfuric acid, PTSA, and aluminum chloride.

Among the carbonized materials 19 reacted with potassium hydroxide, silicic acid reacts with potassium hydroxide to form potassium silicate. The remaining water-soluble potassium hydroxide (KOH) and potassium silicate are dissolved in water, and the resulting mixture is passed through a filter paper set in a vacuum or reduced-pressure filter to remove silicon oxide (silicon). The dried activation process (S3) produced graphene 113, a final product approximately 1/8 to 1/10 the weight of the initial plant-based raw material 9 granulated.

The plasma device 10 of this embodiment will be described with reference to Figure 6. Figure 6 is a schematic diagram showing the configuration of the plasma device 10 of this embodiment. The plasma device 10 is primarily composed of an inert gas 6, a control device 20, a chamber 1, and a vacuum pump 30.

The inert gas 6 stored in the gas cylinder is primarily argon, but other gases include helium, neon, and nitrogen. The inert gas 6 can be charged into the chamber 1 via an inlet pipe 7 through a gas volume control device 21. The gas volume control device 21 can adjust the flow rate of the inert gas 6.

The chamber 1 is connected to a control valve 22, and the pressure inside the chamber 1 can be reduced to a vacuum using the vacuum pump 30. Upon connected to the chamber 1, the inert gas 6 is introduced into the chamber 1. A leak valve 23 is installed between the control valve 22 and the chamber 1, which releases the vacuum inside the chamber 1 to atmospheric pressure. A control valve 14 and a leak valve 15 are further installed; the control valve 14 is provided between the outlet pipe 8 and the vacuum pump 30 to introduce air from the chamber 1; the leak valve 15 is provided to release the vacuum inside the chamber 1 to atmospheric pressure.

The temperature control device 24 controls the high-frequency power supply 4 and manages the temperature and duration inside the chamber 1. The plasma device 10 of this embodiment generates thermal plasma through arc discharge by flowing argon gas (inert gas 6) as a working gas under low pressure, near-vacuum conditions, and flowing a high current between the electrodes (a cathode 2 and an anode 3). A carbon crucible 5 is placed between the cathode 2 and anode 3, and the plant-based raw material 9 (described below) is contained in the crucible 5. The plant-based raw material 9 is heated up to a temperature range between 300°C and 1000°C by the thermal plasma generated by the arc discharge, and is carbonized in approximately 10 to 30 minutes. In addition to the plasma device described above, other methods for generating thermal plasma include barrier discharge, corona discharge, pulse discharge, and direct current discharge.

In the above manufacturing method, a gas-phase reaction occurs, and by mixing a small amount of reactive gas, such as the inert gas 6, functional groups such as -OH (hydroxyl group), -CHO, -C=O (carbonyl group), and -COOH (carboxyl group) are generated, imparting hydrophilicity.

The manufacturing method is not limited to the above. The heat source may be induction heating, gas, or an electric furnace, in addition to the plasma device.

In the case of induction heating, even if the plant-derived raw material 9 contains an insulator such as silicon dioxide (SiO2), the magnetic flux penetrates the plant-derived raw material 9, thereby making the plant-derived raw material 9 conductive. This heats the plant-derived raw material 9 itself, accelerating the heating and allowing for rapid carbonization.

Furthermore, since the insulator, such as silicon dioxide (SiO2), is penetrated by the alternating magnetic flux, the silicon dioxide (SiO2) itself remains intact because it is only heated from the storage box 205 and is not at a melting temperature. This leaves much of the silicon dioxide (SiO2) as it is and other insulators behind.

### <Process Flow 2>

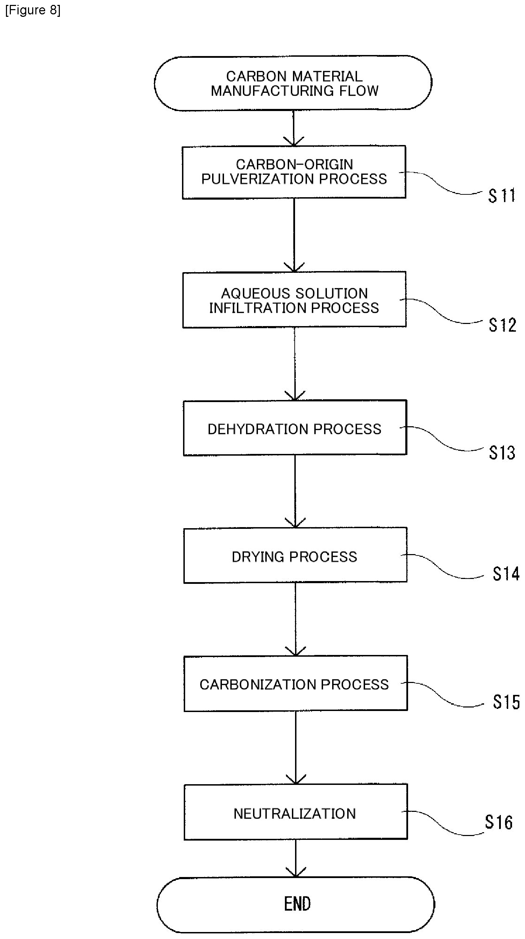

Figure 8 shows a main flow of the manufacturing method for producing carbon material 100. In this example, the method for producing carbon material 100 to be graphene is described based on the flow from S11 to S16.

First, the plant-based raw material 9 described above is pulverized in a pulverizer. Since the plant-based raw material 9 is held in a dehydration container 15 with slits, holes, or a mesh, as described below, for dehydration, a carbon-origin pulverization process (S11) is performed to pulverize the plant-based raw material to a degree that does not result in an excessively fine powder. The carbon-origin pulverization process (S11) is sufficient to pulverize the plant-based raw material to a degree that allows the alkaline aqueous solution to easily soak into the plant-based raw material in the next process. Note that step S11 may not necessarily be performed first; the pulverization may be performed last.

Next, the pulverized plant-based raw material 9 is subjected to an aqueous solution infiltration process (S12), in which the plant-based raw material 9 is reacted with an alkaline aqueous solution 20 at a temperature of 60°C or higher for 1 to 10 hours. A reaction time of approximately 4 hours provides the most efficient production.

In addition, this step (S12) may involve soaking the plant-derived raw material 9 in the aqueous solution 20 at room temperature for approximately one week. In this case, it is possible to adjust the pH of the aqueous solution 20 and use a weakly alkaline aqueous solution 20 with a pH of around 9.

The alkaline concentration in the aqueous solution 20 is adjusted to 10-50% by weight. By reacting the plant-derived raw material 9 in this aqueous solution 20, the silica components contained in the plant-derived raw material 9 are primarily removed and extracted into the aqueous solution 20.

This increases the concentration of organic components and the carbon content of the carbon material 100 as the final product. The alkaline aqueous solution 20 is best at a concentration of 30% by weight, with a pH of approximately 9 to 14. The aqueous solution 20 produced with potassium hydroxide at a pH of 13 is most suitable. The optimal amount of plant-derived raw material 9 added is between 80% and 200% by weight of the potassium hydroxide before dissolving it in water.

Alkaline materials include sodium hydroxide, potassium carbonate, and alkalis such as potassium hydroxide and sodium carbonate. However, the best is potassium hydroxide, which has a pH of 13 and is the same component as potassium contained in plant-derived raw material 9. This is effective for converting carbon material 100 to graphene.

This is a scanning transmission electron microscope image of carbonization treatment at 300°C to 500°C without alkaline treatment. The elemental distribution reveals that Al (aluminum) is scattered as fine particles. K (potassium) is present as large particles.

Therefore, removing potassium and aluminum improves the purity of the carbon and also leads to improved electrical conductivity. It is also ideal for forming porous carbon materials. Aluminum, in particular, is easily soluble in alkalis, and can be more easily removed by carbonization at high temperatures. Potassium also dissolves easily in alkali, so it is best to use the same potassium hydroxide.

Next, the alkaline plant-based raw material 9 undergoes a dehydration process (S13) to remove the water from the aqueous solution 20. This process leaves the plant-based raw material 9 in an alkaline atmosphere without neutralization or water washing (S13). This process removes the water, minimizing damage to the equipment or container, such as a crucible, caused by alkaline water due to evaporation of water during carbonization.

In the dehydration process (S13), the plant-based raw material 9 that has undergone the aqueous solution infiltration process (S12) is placed in a metal, cloth, or plastic dehydration container 15 equipped with a mesh, slit, or hole structure, or a combination thereof, and then dehydrated in a centrifugal dehydrator, similar to laundry. The dehydration container 15 may be any container that allows water to escape by centrifugation, and may be bag-shaped, box-shaped, cylindrical, or other suitable container.

Another dehydration method is to place the plant-based raw material 9 in a bag-shaped dehydration container 15 and squeeze the bag with a squeezer to remove the moisture.

Dehydration is performed by centrifugation using a rotary dehydrator, such as a washing machine (S13). The rotation speed during dehydration is preferably 300 to 3000 rpm, and optimally 500 to 1500 rpm. This centrifugation can promote the destruction of plant cells and the discharge of impurities such as silica contained in the plant-based raw material 9.

Next, a drying process (S14) is performed in a similar manner, using a drying device or drying in the shade to remove the moisture from the aqueous solution 20. An alkaline atmosphere is maintained without neutralization or rinsing (S14). Because moisture can be removed in this process, it is possible to minimize damage to the equipment or container, such as a crucible, caused by alkaline moisture due to evaporation of moisture during carbonization. Furthermore, since only alkaline moisture needs to be removed, the drying step (S14) is not necessarily required as long as moisture can be removed in the dehydration step (S13) described above; the plant material may be in a wet state.

Next, a carbonization process (S15) is performed in which the plant material 9 is carbonized in an alkaline atmosphere by purging gas such as nitrogen or argon gas or sealing it with carbon felt, etc., in an oxygen-free environment, and maintaining a combustion temperature of 1100°C for 5 hours.

In the carbonization step (S15), the higher the temperature, the more rapidly the graphene formation and graphitization will progress. A combustion temperature of approximately 1000°C to 2200°C is optimal, and it is sufficient to maintain this temperature for a carbonization time of 2 to 10 hours.

Manufacturing equipment often uses metal to house the plant-derived raw material 9. However, to make it resistant to alkaline conditions, it is recommended to use a container for housing the plant-derived raw material 9 made of alumina or other thermal spraying, or an alumina material. Alternatively, it is preferable to use a rotary kiln-type carbonization device, induction heating furnace, electric furnace, or other device that is resistant to alkaline conditions.

Compared to conventional activation processes in which a solid alkaline material is reacted with the plant-derived raw material 9, the plant-derived raw material 9 in the state of S13 is less susceptible to direct alkaline corrosion of the metal, thereby improving the durability of the manufacturing equipment.

Finally, after carbonization (S15), the carbon material 100 is exposed to water or an acidic aqueous solution such as hydrochloric acid, sulfuric acid, or citric acid for neutralization (S16), and any remaining silica, etc. is removed (S16). Furthermore, by subsequently drying and storing in a vacuum, the carbon material 100 can be shipped while maintaining its physical properties, such as electrical conductivity.

In order to improve purity, neutralization treatment (S16) is preferably performed by washing using only water, such as pure water. Neutralization using acids is also possible, but because it is necessary to rinse away the acid and remove solids such as silica, neutralization treatment (S16) using water is the most cost-effective option.

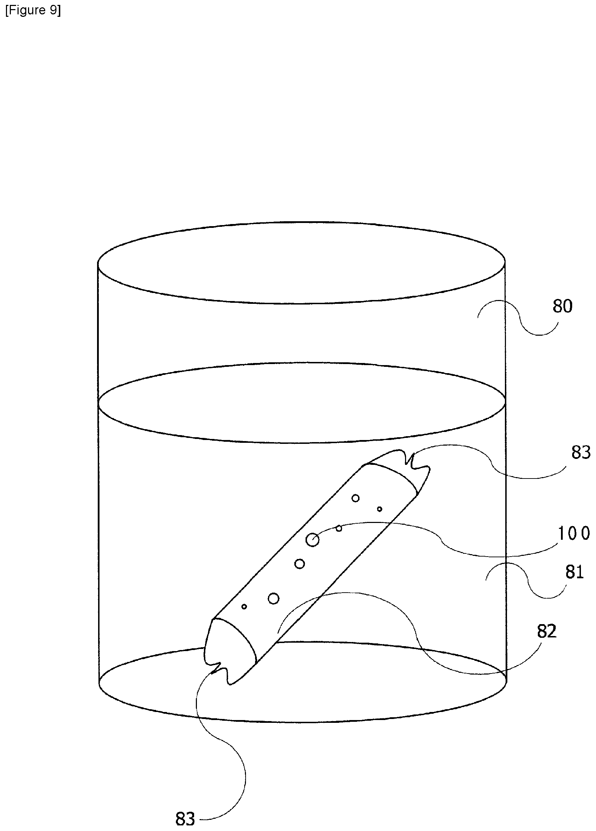

In this case, as shown in Figure 9, pure water 81 is placed in container 80, and carbon material 100 and pure water are placed inside a bag-shaped permeation membrane 82 that only allows water molecules to pass through. Submerging both ends 83 in the pure water creates a pressure balance from the aqueous solution containing impurities, including the carbon material 100, causing the water containing alkaline components to pass through the membrane and into the pure water 81. In this way, using permeation membrane 82 enables faster treatment.

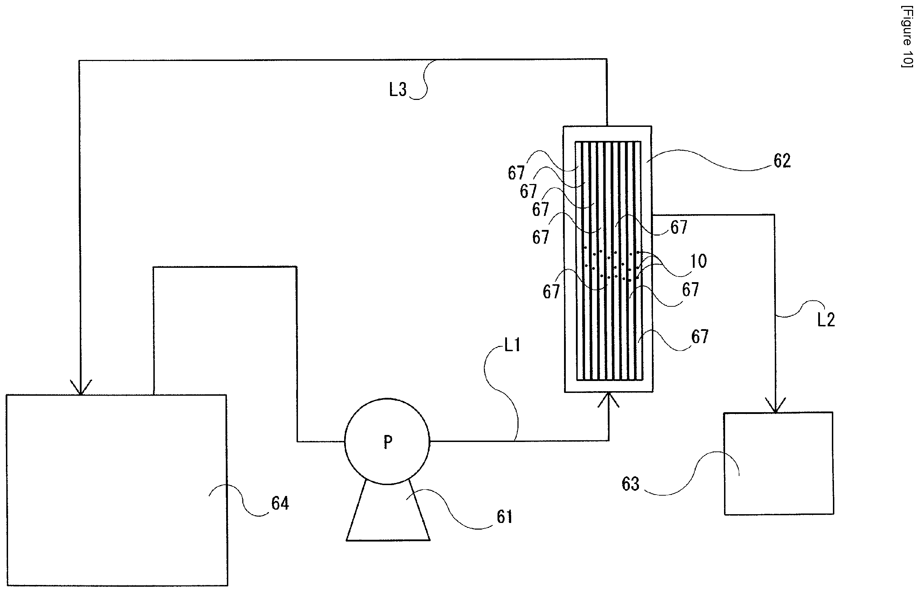

Furthermore, with reference to Figure 10, another example of neutralization treatment (S16) will be described. An aqueous solution (L1) containing the carbon material 100 is forced upward by a pump 61 from a bath 64 containing the carbon material 100 and pure water through a tube 62 equipped with multiple tubular reverse osmosis membranes 67.

An aqueous solution (L2) containing an alkaline component is collected from the tube 62 into a collection container 63, and an aqueous solution (L3) containing the carbon material 100 is returned to the bath 64. The bath 64 is replenished with the same amount of pure water collected in the collection container 63. In this manner, the aqueous solution containing alkaline components is gradually neutralized by circulation.

### <Process Flow 3>

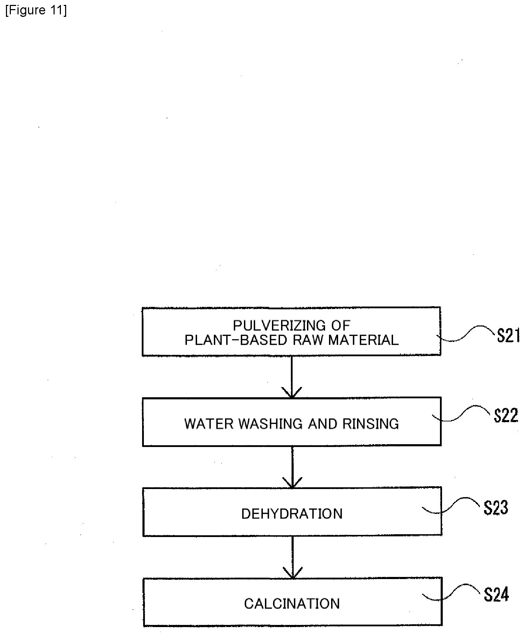

A method for producing carbon material 100 using rice husks, one of the plant-based raw materials 9 of this embodiment, is described in Example 1 with reference to Figure 11. This production method is particularly suitable for the carbon material 100 used as a conductive material.

The plant-based raw material 9 is pulverized. Since micronization is performed last, in this process it is sufficient to pulverize it enough so that it soaks into the interior when immersed in water. Since it will go through a dehydration process, it is sufficient if the particles are small enough not to slip through the slits or holes. The best size after pulverization is about 5 to 10 mm. Examples of pulverization methods include mills, mixers, grinders, etc. A specific pulverization step is not necessary; it is sufficient if water or the like penetrates the raw material during washing.

Next, the crushed plant-based raw material 9 is washed with water (S22). For example, rice husks are soaked in pure water. After soaking the rice husks for one hour to one day, stones, mud, etc. are washed away. The liquid temperature should be between room temperature and 80°C. The water washing (S22) can be performed by pouring water and then stirring with an agitator.

It is also possible to perform washing by pouring water little by little while stirring. For stirring, a vortex device or a device that rotates blades can be used, or a stirrer device can also be used.

Next, the water-washed plant-based raw material 9 is placed in the dehydration vessel 15 described above and dehydrated using a rotary dehydrator, such as a washing machine (S23). The rotation speed during dehydration should be between 300 and 3000 rpm, and ideally between 500 and 1500 rpm.

Furthermore, the optimal gravitational acceleration during centrifugation in the dehydration device is approximately 2G to 5G. The dehydration device may be the same device for all steps from washing to rinsing and dehydration (S22-S23), or the dehydration container 15 may be built-in or attached.

During dehydration, impurities are removed along with the moisture. The plant-based raw materials 9 can then be moved on to the next calcinating process while still moist, without going through a drying step. It was confirmed that this rotational dehydration process also promotes the tissue decomposition of the plant-based raw materials 9, allowing the plant-based raw materials 9 to proceed to the next step without a drying step.

As a result, eliminating the drying step shortened the production time. Furthermore, when water is removed away by centrifugation during dehydration, the destruction of the cell walls of the plant-based raw materials 9 is promoted, leading to further destruction to the interior.

Thus, even in the examples, using rotary dehydration does not necessarily require any drying step, but drying further reduces the impact of rust and other factors on the combustion device. Furthermore, compared to the process of activating the plant-based raw material together with a solid alkaline material, the impact on the combustion device is even less.

Next, in the calcination process (S24), the plant-based raw material 9 is placed in a furnace, which is then filled with argon or nitrogen gas to create an oxygen-free environment. The furnace temperature is raised to 1100°C and maintained at 1100°C for a prescribed period of approximately 1 to 10 hours. The plant-based raw material 9 is then naturally calcined for a total calcination time of one day. This produces the carbon material 10.

Furthermore, in the calcination process (S24), the plant-based raw material 9 is not completely dry after the dehydration process (S23), but rather remains somewhat moist when transitioning to the calcination process (S24). This initially induces so-called steam activation, which promotes destruction and decomposition of the cell walls.

Furthermore, steam activation generates micropores, making it easier to form porous materials similar to activated carbon. In the firing step (S24), it is recommended to use a rotary kiln-type carbonization device, induction heating furnace, electric furnace, continuous carbonization furnace, etc.

Furthermore, during the water washing step (S22), the plant-based raw material 9 is placed in a container such as a pressure cooker, and by applying pressure of 2 to 2.45 atmospheres together with water and temperature of 120 to 128°C, the cell walls of the plant-based raw material 9 are quickly destroyed, leading to the removal of impurities and improved purity.

In another example, wheat or barley husks, cocoa husks, and sake lees were burned in an oxygen-free environment at temperatures of 1000 to 1500°C using a device such as a rotary kiln-type carbonization device, induction heating furnace, electric furnace, continuous carbonization furnace, etc. Alternatively, calcination may be performed after steps S21 to S23 have been completed. For example, when using a viscous plant-based raw material 9 such as sake lees, the raw material is placed in a box-shaped storage container with an open top. It is then compressed and stored by pressing from above with a plate-shaped press plate slightly smaller than the open area of the box. The container is then completely filled and the lid is placed. The material is then burned at a temperature of 1000°C to 1500°C.

Furthermore, the specific surface area was measured using the BET adsorption isotherm based on the amount of nitrogen adsorbed at liquid nitrogen temperature.

The results showed that wheat and barley husks, cocoa husks, and sake lees had specific surface areas ranging from 15 m²/g to 80 m²/g. This low specific surface area improves dispersibility in emulsions such as acrylic, allowing the carbon material to mix uniformly and improve conductivity. Furthermore, improved dispersibility improves the dispersion of the paint, ensuring surface strength.

### <Process Flow 4>

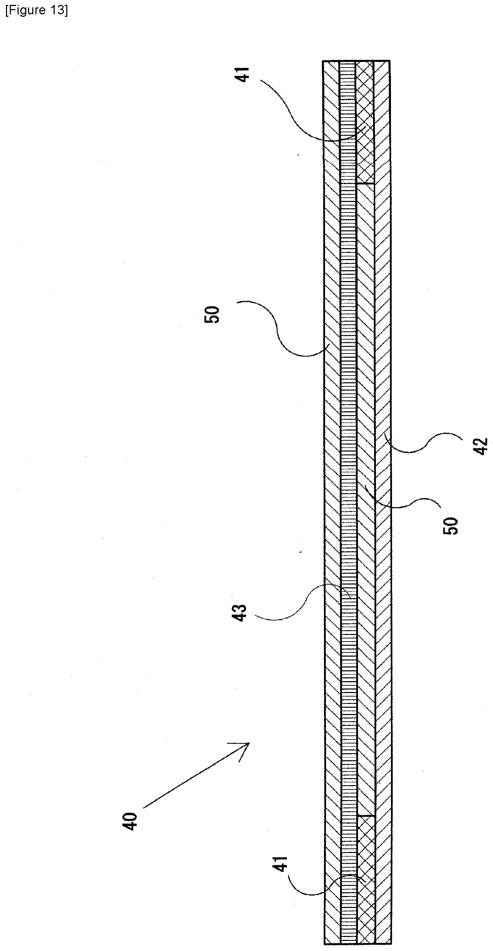

A method for producing carbon material 100 using rice husks, one of the plant-based raw materials 9 of this embodiment, will be described with reference to Figure 13. This production method is particularly suitable for carbon material 100 used as a conductive material.

The plant-based raw material 9 is pulverized. Since micronization is performed in the final step, this step requires only pulverization to the extent that the particles penetrate the interior when immersed in water. Furthermore, since the dehydration step will be performed, the particles should be small enough to not slip through slits or holes. The optimal size after pulverization is approximately 5 to 10 mm. Examples of pulverization methods include a mill, mixer, grinder, etc. A specific pulverization step is not required; it is sufficient if an aqueous solution or the like penetrates the raw material during washing, etc.

Next, the plant-based raw material 9 is carbonized at a temperature of 500 to 800°C for approximately 3 minutes to 3 hours (S32). The carbonized carbide 19 is immersed in acid (S33). Hydrofluoric acid is suitable for this purpose, and any solution that dissolves silicon components into the acid solution can be used.

Next, after acid washing (S33), the carbide 19 is washed with water or the like to remove the silicon components. It is best to neutralize the carbide by washing with water or the like. It is then immersed in an alkaline aqueous solution (S34) as in process flow 1 or 2 described above.

Next, the carbide 19 is placed in the aforementioned dehydration vessel 15 and dehydrated using a rotary dehydrator, such as a washing machine (S35). The rotation speed during dehydration is preferably 300 to 3000 rpm, and optimally 500 to 1500 rpm. Expressed in terms of gravitational acceleration, a rotation speed of approximately 2 to 5 G is suitable.

The dehydrated carbide 19 can then be passed on to the next firing step in a wet state without undergoing a drying process. This rotational dehydration step (S35) removes the silicon component contained in the carbide 19.

This makes it possible to shorten production time by eliminating steps such as drying. Furthermore, when water is removed by centrifugation during dehydration, the destruction of the cell walls of the plant-derived raw material 9 is promoted, allowing the alkaline aqueous solution to penetrate deeper into the plant-derived raw material.

Thus, even in this example, if rotary dehydration is used, the drying step is not necessarily required. However, drying further reduces the impact of rust and other problems on the combustion equipment. Furthermore, the impact on the combustion equipment is even less than in the process of activating the plant-derived raw material together with a solid alkaline material.

Next, in the calcinating step (S35), the plant-derived raw material 9 is placed in a furnace, which is filled with argon or nitrogen gas to create an oxygen-free environment. The furnace temperature is raised to 1100°C, and the temperature is maintained at 1100°C for a set period of approximately 1 to 10 hours, producing the carbon material 100.

Furthermore, in the calcination step (S36), the plant-based raw material 9 after the dehydration step (S35) is not completely dry, but rather remains somewhat moist when it is transferred to the calcination step (S36). This causes so-called steam activation to occur initially, which leads to the destruction of cell walls and the promotion of the formation of porous pores.

Furthermore, activation in an alkaline atmosphere, in addition to steam activation, generates micropores, making it easier to form a porous material similar to activated carbon. For the calcination step (S36), it is recommended to use a rotary kiln-type carbonization device, induction heating furnace, electric furnace, continuous carbonization furnace, etc. Finally, the neutralization treatment (S16) of Process Flow 2 may be performed.

### (Graphene and Carbide)

The following describes the graphene 113, which is the carbide 19 obtained in the carbonization step S2 and the calcination step (S24, S32) produced in the above-described example, and the carbon material 100 obtained in the activation step S3.

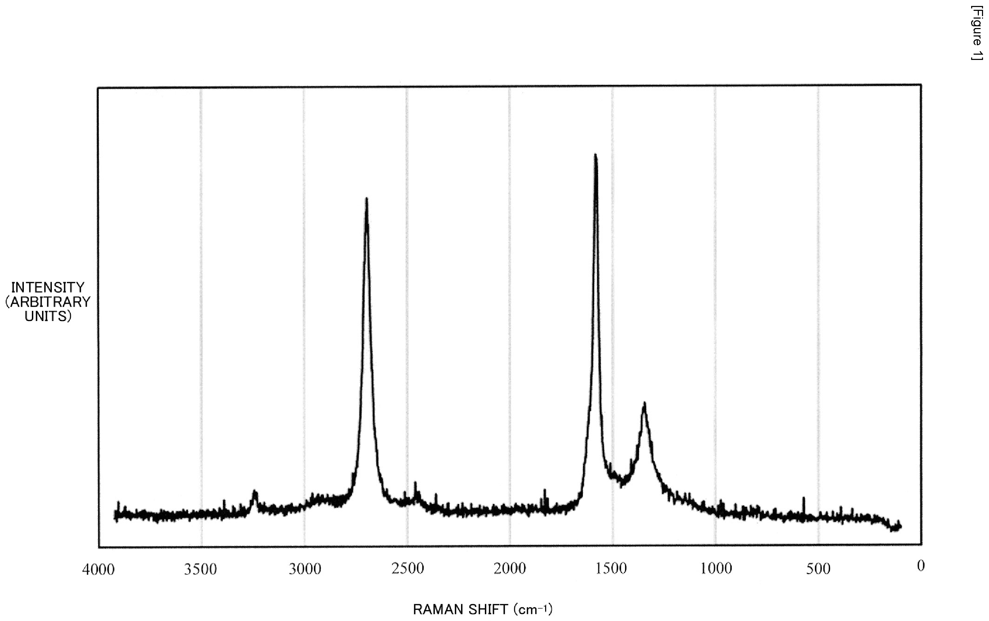

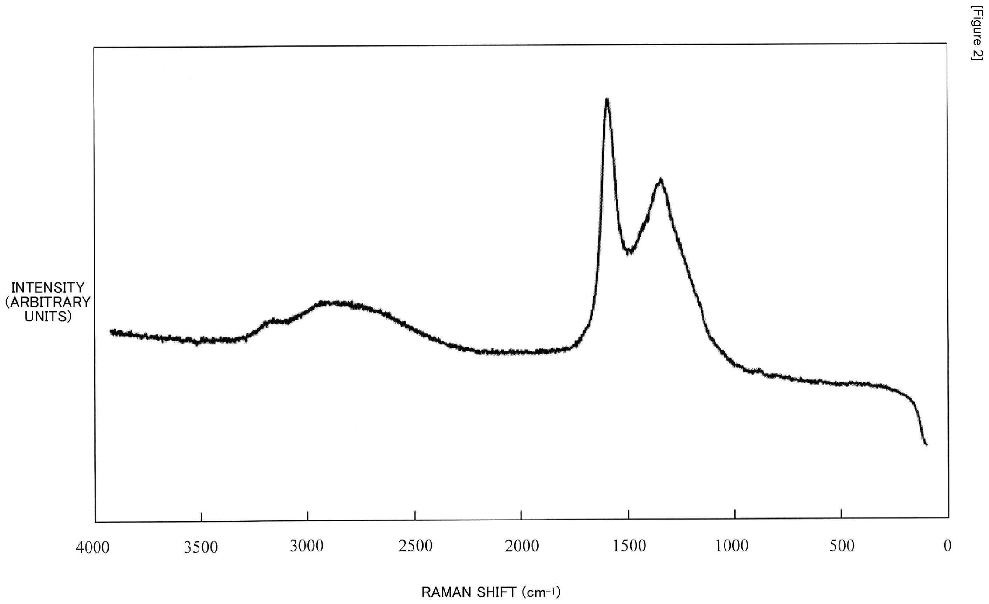

Figure 1 shows the Raman spectrum of graphene 113 obtained using the production apparatus of the present invention. Figure 2 shows the Raman spectrum of carbide 19 obtained using the production apparatus of the present invention.

These figures were analyzed using a Raman spectrometer, and the obtained data are Raman spectra with the horizontal axis representing wavelength (wavenumber (Raman shift (cm⁻¹))) and the vertical axis representing intensity.

Furthermore, as shown in Table 4, the peak values I, G, of the G band (2850 cm-1) and I, G, of the 2D band (1650 cm-1), which are wavelength peaks obtained by Raman spectroscopy, are shown.

As shown in Table 4, the value obtained by dividing IG by ID for graphene 113 is 1.68, indicating that it has the fewest layers among plant-based raw materials 9. It was confirmed that carbide 19 in particular contains a large amount of silicon, and that oxygen functional groups containing -OH, -CHO, -COOH, etc. are produced.

The value obtained by dividing IG for graphene 113 by ID is preferably 0.9 or higher, and exhibits a value between 0.9 and 2.0.

Thermogravimetric analysis showed that carbide 19 obtained in carbonization step S2 had a high ash content (excluding carbon) of 37.1 wt%, and of that ash, silicon (Si) accounted for 24 wt% to 50 wt% of the total carbide 19. Other elements included K from 0.51 wt% to 7 wt%, Al from 0.1 wt% to 1.6 wt%, Ca from 0.17 wt% to 0.5 wt%, and Fe of 0.4 wt%, while Cr, Ni, Mn, Mg, P, S, and Na were all below 0.1 wt%.

Carbonized material 19 obtained in carbonization step S2 without the activation step S3, which is known as activation treatment, contains a large amount of silicon. When carbonized in an inert gas, it is not strongly reduced and becomes SiO2-x, which bonds with aromatic -OH groups and the like in the form of -O-Si-O-R to form a ligninpolysaccharide complex, presumably easily taking the form of C/SiOx.

Furthermore, according to thermogravimetry, the graphene 113 obtained in the activation process S3 described below has a high ash content (excluding carbon) of 1% to 24 wt%, of which silicon (Si) accounts for 1 wt to 20 wt% of the graphene 113 as a whole. Other elements include 4.3 wt% K, 1.5 wt% Al, 1.3 wt% Ca, and 0.4 wt% Fe, with P, Mn, Cl, S, and Mg each being 0.1 wt% or less.

As described above, the silicon content of the graphene 113 and carbide 19, which are carbon material 100, is high, ranging from 1 wt% to 50 wt%.

**[Table 4]**

| | GRAPHENE | CARBIDE |
|---|---|---|
| MESOPORE VOLUME (ml/g) | 0.487 | 0.259 |
| MICROPORE VOLUME (ml/g) | 0.46 | 0.27 |
| SPECIFIC SURFACE AREA (m²/g) | 1780 | 726.4 |
| POWDER RESISTIVITY (Ω · cm) | 1.0 × 10⁻² | 4.83 × 10^{2~5} |
| TRUE DENSITY (g/cm³) | 2.56 | 2.27 |
| IG/ID | 1.13 | - |

As shown in Table 4, the results of CO2 adsorption/desorption measurements confirmed that graphene 113 and carbide 19 had formed with fine pores with diameters primarily ranging from 0.8 nm to 2 nm.

This suggests that they are well suited to adsorbing metal ions and other contaminants. Furthermore, as shown in Table 4, the mesopore volumes measured by gas adsorption and water vapor adsorption measurements were 0.487 ml/g for graphene 113 and 0.259 ml/g for carbide 19. Furthermore, the micropore volumes were 0.46 ml/g for graphene 113 and 0.27 ml/g for carbide 19.

As shown in Table 4, the particles of graphene 113 and carbide 19 exhibited diameters ranging from 15 µm to 229 µm, with a median diameter of approximately 110 µm, calculated as the median of the integrated values of the distribution.

As a result, a mesopore volume of 0.2 ml/g to 0.6 ml/g is formed. Graphene 113, after the activation treatment to remove impurities (described below), exhibits a particularly high value, suggesting that mesopores and micropores grow due to the removal of silicon.

Furthermore, as shown in Table 4, the specific surface area measured by the water vapor adsorption measurement method, according to the BET method, was shown as 1792 m2/g for graphene 113, ranging from 890 m²/g to 2500 m²/g. Carbide 19 exhibited 726.4 m2/g, ranging from 890 m²/g to 1500 m²/g. Both had large specific surface areas, and graphene 113 after the silicon component (Si) was removed exhibited an even larger specific surface area.

As a result, graphene 113 has a high adsorption effect. In particular, carbon material 100 produced using rice husks as plant raw material 9 in process flow 4 had a surface area of 2000 m²/g to 2600 m²/g.

Furthermore, carbide 19 can be found in two states: one in which the elemental component Si (silicon) is contained in minute amounts on the surface or inside of carbide 19 in the form of Si (silicon) or silicon dioxide (SiO2), and another in which Si (silicon) or silicon dioxide (SiO2) aggregates on the surface or inside of carbide 19. By subjecting carbide 19 to activation treatment, the carbon purity and specific surface area are both increased.

As shown in Table 4, the true densities measured using a gas displacement density measurement device were 2.56 g/cm3 for graphene 113 and 2.27 g/cm3 for carbide 19. The bulk density of graphene 113 was 0.21 to 0.29 g/cm3.

Furthermore, the powder resistivity measured using a double-ring method and a four-terminal method was 1.27 x 10³ to 10⁵ Ω·cm for carbide 19, while the removal of silicon resulted in a 1.0 x 10⁻² Ω·cm for graphene 113, improving conductivity. While the lower the resistance, the better, the optimal value for graphene 113 is 1.0 x 10⁻³ Ω·cm to 3.8 x 10⁻² Ω·cm.

Furthermore, by leaving a large amount of silicon in carbide 19, it becomes more easily dissolved in substances that are easily adsorbed by silicon, thereby improving its insulating performance.

### (Heat-generating Paint)

The following describes a heat-generating paint manufactured using the above-described carbon material 100 (carbide 19 and graphene 113) as a pigment.

The applicant has conducted tests on various types of paints to find the optimal conditions. The types of paints tested in this example were two-liquid solvent-based paint, one-liquid solvent-based paint, and one-liquid water-based paint.

**Table 5**

| | TWO-LIQUID SOLVENT-BASED PAINT | | ONE-LIQUID SOLVENT-BASED PAINT | | ONE-LIQUID SOLVENT-BASED PAINT | |
|---|---|---|---|---|---|---|
| BINDER | ACRYLIC URETHANE | | SILICONE | | ACRYLIC EMULSION | |
| SOLVENT | XYLENE | | XYLENE | | WATER | |
| PIGMENT SPECIES | CARBIDE 19 | GRAPHENE 113 | CARBIDE 19 | GRAPHENE 113 | CARBIDE 19 | GRAPHENE 113 |
| LIMITING AMOUNT (wt%) | 47 | 31 | 52 | 30 | 30 | 15 |
| PWC VALUE (wt%) | 73 | 63 | 71 | 60 | 56 | 33 |

As shown in Table 5, the two-liquid solvent-based paint used acrylic urethane as the binder and was diluted with xylene as the solvent. The pigment used was the carbon material 100 (Carbide 19 and Graphene 113) described above. This two-liquid solvent-based paint is a type that is cured using a hardener.

The one-liquid solvent-based paint used silicone as the binder, xylene as the solvent, and the pigment used was the carbon material 100 (Carbide 19 and Graphene 113) described above. This one-liquid solvent-based paint is heat-curable and has excellent heat resistance, with a temperature resistance of up to 150°C.

The one-liquid water-based paint used an acrylic emulsion as the binder, water as the solvent, and the aforementioned carbon material 100 (Carbide 19 and Graphene 113) as the pigment.

The binder was gradually added to the carbon material while stirring with a disperser,
and the limiting amount at which the stirred solution remained liquid was determined. The pigment weight concentration (PWC value) at that time was also calculated.

**[Table 6]**

| | | TWO-LIQUID SOLVENT-BASED PAINT | | | | | | | ONE-LIQUID SOLVENT-BASED PAINT | | | | | | ONE-LIQUID SOLVENT -BASED PAINT | |
|---|---|---|---|---|---|---|---|---|---|---|---|---|---|---|---|---|
| | | CB19 | | | | GP113 | | | CB19 | | | GP113 | | | CB 19 | GP 113 |
| | | <67> | <50> | <25> | <10> | <56> | <25> | <10> | <71> | <50> | <25> | <60> | <50> | <25> | <56> | <33> |
| DRIED FILM THICKNESS | AVG. (*µ*m) | 78 | 67 | 57 | 54 | 74 | 63 | 53 | 91 | 62 | 54 | 87 | 74 | 50 | 69 | 52 |
| | MAX (*µ*m) | 76 | 62 | 53 | 51 | 70 | 61 | 50 | 82 | 58 | 48 | 76 | 70 | 49 | 67 | 47 |
| | MIN (*µ*m) | 80 | 74 | 63 | 60 | 79 | 69 | 56 | 100 | 66 | 61 | 93 | 79 | 59 | 72 | 63 |
| APPEARANCE | | ○ | | Δ | | ○ | | Δ | ○ | | Δ | ○ | | Δ | × | |
| FILM-FORMING PROPERTY | | ○ | | | | ○ | | | ○ | | | ○ | | | ○ | Δ |
| GLOSS | | <1 | 2 | 18 | 57 | <1 | 3 | 31 | <1 | 4 | 33 | <1 | <1 | 3 | 2 | 2 |
| FLEXIBILITY | | × | | ○ | | ○ | | | ○ | | | ○ | | | ○ | |

| | | | | | | | | | | | | | | | | |
|---|---|---|---|---|---|---|---|---|---|---|---|---|---|---|---|---|
| CB19 : CARBIDE 19 GP113 : GRAPHENE 113 | | | | | | | | | | | | | | | | |

As shown in Table 6, each carbon material and each coating film with different PWC values were evaluated. First, 10 g of each limiting liquid was placed on a tin plate, and the binder and hardener were mixed to achieve the PWC value set within the < > brackets. The coating liquid was then stirred with a spatula to form a coating. The dried film thickness was then measured. The coated paint was visually inspected for unevenness, cracks, color, and gloss spots. Circle indicates no defects, triangle indicates the presence of any of these defects, and mark x indicates significant defects.

Film-forming properties are results measured by scratching the paint surface with a fingernail or similar to see if the coated paint peels off. Circle indicates no peeling, while mark x indicates peeling.

Gloss is measured at a 60-degree angle. Sign <1 indicates a value less than 1.

Furthermore, film properties were evaluated by scratching the coated paint surface with a fingernail or other object to see if the coated paint peeled off. Circle indicates no peeling, and mark × indicates peeling.

Flexibility was evaluated by forming a coated paint on paper and bending the paper to see if cracks or breaks occurred in the coated paint at the peaks. Circle indicates no crack or break, and mark × indicates some crack or break occurred.

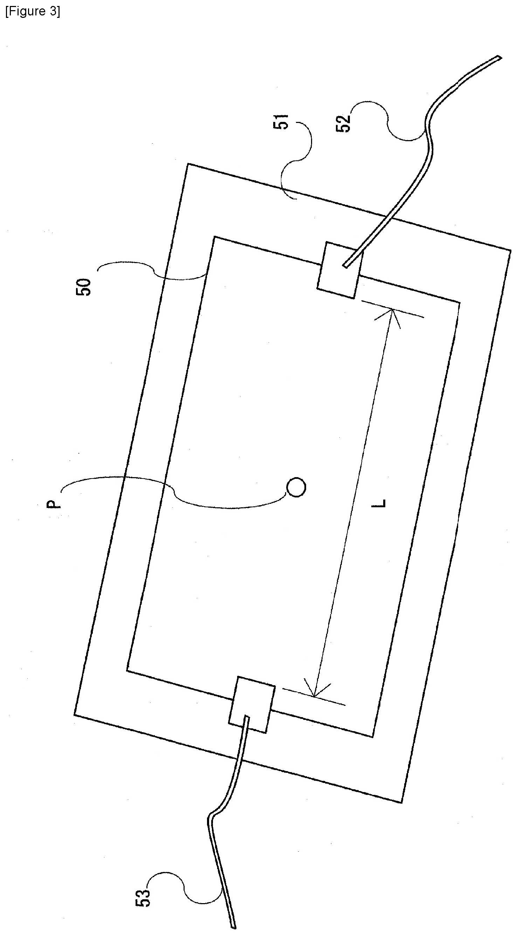

Next, performance as a heat-generating paint is described. Figure 3 shows the above-mentioned one-liquid solvent-based heat-generating paint 50 applied to an insulator 51, such as paper, cloth, or plastic resin. A positive electrode 52 and a negative electrode 53 are attached to ends of the center of the heat-generating paint 50, and applying power to these electrodes generates heat from the area at which the heat-generating paint 50 is applied. The distance H between the electrodes is 4.5 cm, and the area coated with the paint is 22.5 cm².

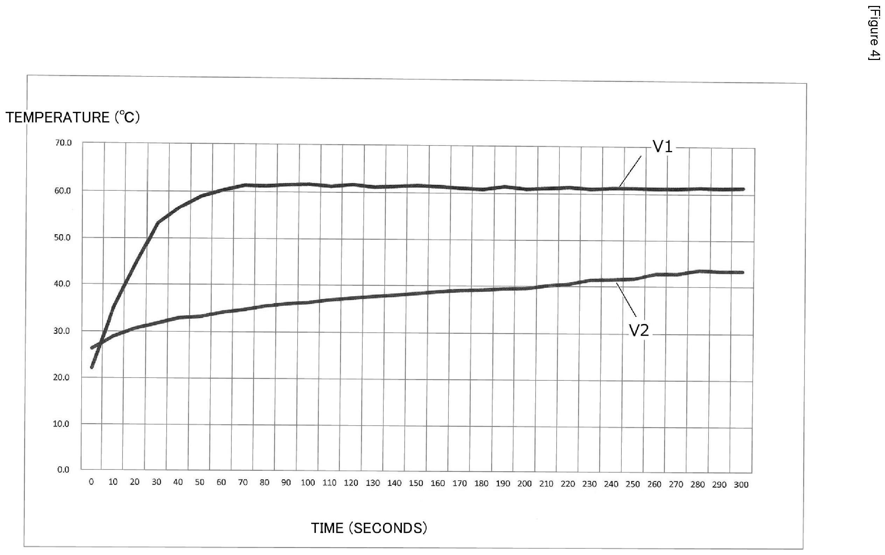

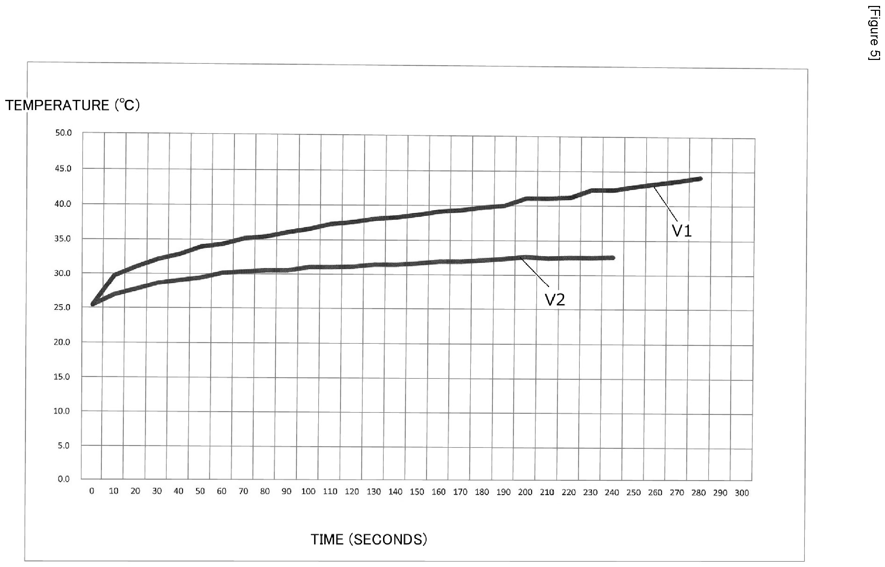

Furthermore, Figures 4 and 5 show heat-generating characteristics of the heat-generating paint 50. Figure 4 is a graph of time (seconds) versus temperature (°C) for a heating element 40 with a coating thickness of 160 µm to 175 µm. V1 is a temperature graph measured at point P in Figure 3 when DC 20 V is supplied. The power value is 4 to 4.8 W, and the temperature rises from room temperature of 22.1°C to a maximum of approximately 62°C in approximately 300 seconds.

V2 is a temperature graph measured at point P in Figure 3 when DC 12 V is supplied. The power value is 2 to 2.4 W, and the temperature rises from room temperature of 26.3°C to a maximum of approximately 43.4°C in approximately 300 seconds.

Figure 5 is a graph of time (seconds) versus temperature (°C) for a heating element 40 with a coating thickness of 60 µm to 75 µm. V1 is a temperature graph measured at point P in Figure 3 when DC 20V was supplied. The power value was 1.6W to 2.0W, and the temperature rose from room temperature of 25.4°C to a maximum of approximately 44.1°C in approximately 280 seconds.

V2 is a temperature graph measured at point P in Figure 3 when DC 12V is supplied. The power value is 0.6W, and the temperature increases from room temperature of 25.4°C to a maximum of approximately 32.6°C in approximately 240 seconds.

Because carbon material 100 contains a large amount of silicon, it is possible to improve the strength and electrical resistance of the paint without any addition of inorganic materials later. In particular, heat-generating paints containing silicon in the carbon material maintain the continuity of the paint film even where heated to high temperatures, making it possible to create highly heat-resistant planar heaters.

Furthermore, by mixing carbide 19 containing many functional groups with graphene 113 to form a paint pigment, it is possible to supply high-voltage power, such as AC power as well as DC power, while stabilizing strength.

Furthermore, carbide 19 containing many functional groups facilitates dispersion and mixture when adjusting resistance. A mixing ratio of carbide 19 to graphene 113 of approximately 0.5:9.5 to 3:7 is recommended. Furthermore, carbon material 100 with a powder resistivity ranging from 1.0×10⁻³ Ω·cm to 3.8×10⁻² Ω·cm can be used alone or in combination with other carbon materials 100.

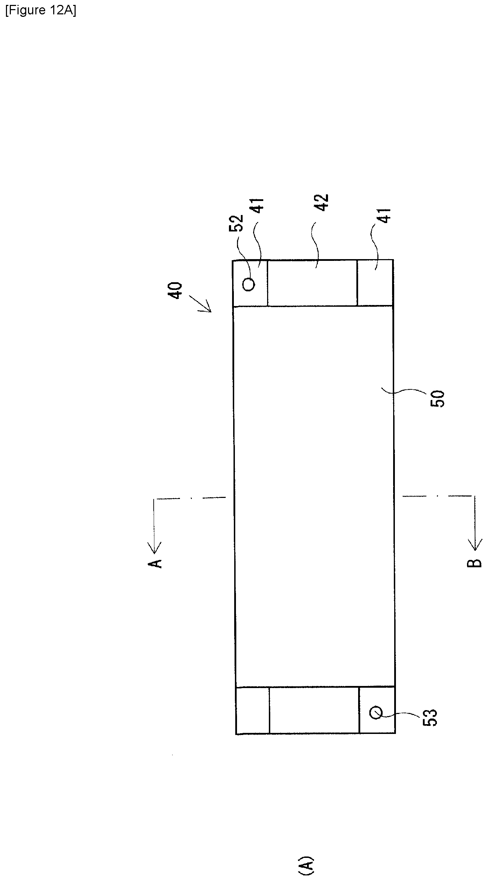

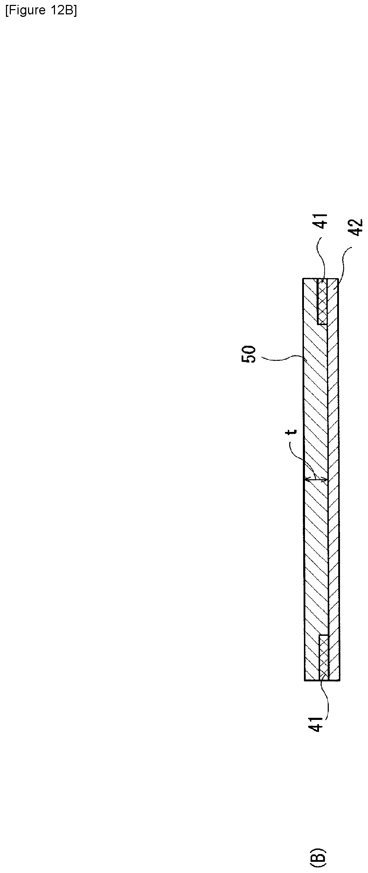

Next, Figures 12 and 13 show another example of a heating element 40. Figure 12(A) is a front view of the heating element 40. Figure 12(B) is a cross-sectional view of the heating element 40 taken along line A-B in the front view.

A heat-generating paint 50 was made by mixing and kneading carbon material 100 at a ratio of 10% to 75% by weight into a synthetic resin emulsion, typically vinyl chloride basis, vinyl acetate basis, or acrylic basis. The optimal ratio was 20% to 60% by weight of carbon. It may also be dispersed using water.

The coating thickness t was 500 µm to 1000 µm. The ideal coating thickness is 100 µm to 1500 µm, and can be adjusted depending on the resistance value and the application area. When using an acrylic emulsion, a thick coating was possible.

The heating element 40 shown in Figure 12 has the positive electrode 52 and the negative electrode 53 formed on a wiring 41, which uses copper foil, silver foil, copper or silver paste, or conductive wire, on a substrate 42. The substrate 42 may be glass, ceramic, concrete, cement, cloth (glass fiber, cotton polyester), plastic resin, etc. The heat-generating paint 50 was applied to the substrate and electrodes and allowed to dry.

The heating element 40 was 56 cm long, 4 cm wide, and had 1 cm-wide electrodes. The overall resistance between the electrodes was 1 Ω to 20 Ω. When DC 12 V was applied, a temperature increase of 20°C to 80°C from room temperature was observed at approximately 24 W of power. The carbon material 100 most suitable for heat-generating paint was found to be a plant-based raw material 9, such as cocoa husks, barley husks, or wheat husks, burned at a combustion temperature of 900°C to 1500°C.

The heating element 40 shown in Figure 13 has the positive electrode and the negative electrode formed on the wiring 41 made of copper foil, silver foil, aluminum foil, copper or silver paste, or conductive wire on the substrate 42. The substrate 42 may be glass, ceramic, concrete, cement, cloth (glass fiber, cotton polyester), aluminum tape, plastic resin, etc.

A nonwoven fabric 43 was laid on top of the substrate 42 and the wiring 41, and then the heat-generating paint 50 was applied and dried. The nonwoven fabric 43 was thin enough to be see-through, and made of a material that allowed the heat-generating paint 50 to pass through. The nonwoven fabric 43 may preferably have a thickness of 10 g/m² to 30 g/m².

A variety of materials can be used for the nonwoven fabric 43, including polyester, polypropylene, polyethylene, rayon, nylon, and wool. The heat-generating paint 50 can pass through the nonwoven fabric 43, so when viewed from the cross section, the nonwoven fabric 43 and the heat-generating paint are mixed together.

The heating element 40 was 50 cm long, 4 cm wide, and had electrodes 1 cm wide. The overall resistance between the electrodes was 1 Ω to 20 Ω. When DC 12V was applied, a temperature increase of 20°C to 90°C from room temperature was observed at approximately 24W of power. The carbon material 100 most suitable for heat-generating paint was obtained by burning plant-based raw materials 9, such as cocoa husks, barley husks, and wheat husks, at combustion temperatures between 900°C and 1500°C.

Other examples of heat-generating paint 50 include carbon material 100 mixed with an aqueous solution of sodium silicate diluted with water. This is particularly suitable for carbon material 100 obtained by carbonizing plant-based raw materials 9 containing 5% to 20% silicon. The silicon contained in carbon material 100 dissolves in the sodium silicate, improving conductivity and strength. Furthermore, since this is an ideal fireproof paint, it can reduce the risk of fire when used as a heat-generating paint.

### (Technical Features)

Hereinafter, examples of technical features of this embodiment are listed in parentheses. These are not intended to be limiting, but are merely showing examples. Potential benefits of these features will also be described.

### <Feature 1>

This method includes a washing process in which plant-based raw materials are immersed in an aqueous solution, agitated, and washed with water; a dehydration process in which, after the washing process, the plant-based raw materials are placed in a container and rotated in a rotary dehydrator to remove moisture from the plant-based raw materials; and a calcinating process in which the plant-based raw materials are calcinated after the dehydration process.

The aqueous solution may be an alkaline aqueous solution, pure water, treated water, or tap water. The optimal temperature of the aqueous solution is between room temperature (20°C) and 100°C. The dehydration container and the washing container may be the same container. The washing and dehydration processes may also be performed in the same device, such as a washing machine.

These features improve manufacturing efficiency by shortening the drying time required for conventional soaking and washing, while also promoting the decomposition of cellulose and other impurities and enabling the removal of impurities.

### [Industrial Applicability]

Industrial applications of the carbon material of the present invention include heat-generating paints for construction materials such as concrete, heat-generating paints, and conductive paints for, such as e.g., battery materials, circuit boards, and heat-dissipating materials.

### [Explanation of Symbols]

1. Chamber
2. Cathode
3. Anode
4. High-frequency power supply
5. Crucible
6. Inert gas
7. Inlet pipe
8. Outlet pipe
9. Plant-derived raw material
10. Plasma device
14. Control valve
15. Leak valve
19. Carbide
20. Control device
21. Gas volume control device
30. Vacuum pump
40. Heat-generating element
42. Substrate
50. Heat-generating paint
51. Insulator
52, 53. Electrodes
100. Carbon material
113. Graphene
S1. Pretreatment process
S2. Carbonization process
S3. Activation process.

## Claims

1. A method for producing a carbon material, comprising:
a washing step in which plant-derived raw materials are immersed in an aqueous solution and are agitated to be washed;
a dehydration step in which, after the washing step, the plant-derived raw materials are placed in a container and rotated in a rotary dehydrator to remove moisture from the plant-derived raw materials;
a calcinating step in which, after the dehydration step, the plant-derived raw materials are calcinated in a wet state without subsequent drying.

2. The method for producing a carbon material according to claim 1, wherein the dehydrator rotates at a speed of 300 rpm to 3,000 rpm.

3. The method for producing a carbon material according to claim 1, wherein the carbon material having a powder resistivity of 1.0 x 10-3 Ω·cm to 3.8 x 10-2 Ω·cm.

4. A method for producing a carbon material using wheat or barley husks, cocoa husks, or sake lees as plant-based raw materials, **characterized in that** the carbon material produced by burning at a temperature of 1000°C to 1500°C in an oxygen-free environment has a specific surface area of 15 m²/g to 80 m²/g.

5. A method for producing a carbon material, comprising:
a carbonization step for carbonizing a plant-based raw material;
an acid washing step for acid-cleaning the carbonized material in an acid solution after the carbonization step;
an alkaline aqueous solution immersion step for immersing the carbonized material in an alkaline aqueous solution after the acid washing step;
a dehydration step for storing the carbonized material in a container and rotating the carbonized material in a rotary dehydrator to remove moisture from the plant-based raw material; and
a calcinating step for calcinating the wet plant-based raw materials without drying them after the dehydration step.
